# EUROPEAN PATENT APPLICATION

(11) **EP 4 459 782 A1**
(43) Date of publication of application: **06.11.2024**
(21) Application number: 21969844.6
(22) Date of filing: 31.12.2021
(51) Int. Cl.: H01M 50/536, H01M 50/533, H01M 4/66

(54) **BATTERY AND ELECTRONIC DEVICE**

(71) Applicant: Ningde Amperex Technology Limited, Ningde, Fujian 352100 (CN)
(72) Inventor: LV, Fang, Ningde, Fujian 352100 (CN); ZHAO, Yi, Ningde, Fujian 352100 (CN); WU, Hua, Ningde, Fujian 352100 (CN)
(74) Representative: Icosa
(86) International application number: PCT/CN2021/144029
(87) International publication number: WO 2023/123501

(57) **Abstract**

A battery (2) and an electronic device (3) are provided. The battery (2) includes an electrode plate assembly (1). The electrode plate assembly (1) includes an electrode plate (100) and a conduction element (200). The electrode plate (100) includes a current collector (110). The current collector (110) includes a first conductive material layer (112), an insulating material layer (111), and a second conductive material layer (113). The current collector (110) is provided with a through opening (1103). The conduction element (200) includes a first conduction part (210), a second conduction part (220), and a third conduction part (230). The first conduction part (210) is disposed on a first side of the current collector (110) and electrically connected to the first conductive material layer (112). The second conduction part (220) is disposed on a second side of the current collector (110) and electrically connected to the second conductive material layer (113). The third conduction part (230) is disposed at the through opening (1103) and electrically connected to both the first conduction part (210) and the second conduction part (220).

## Description

### TECHNICAL FIELD

Embodiments of this application relate to the field of battery technologies, and in particular, to a battery and an electronic device.

### BACKGROUND

A battery is an apparatus that converts external energy into electrical energy and stores the electrical energy therein to supply power to an external device (for example, a portable electronic device) as needed. At present, batteries are widely used in electronic devices such as mobile phones, tablets, and notebook computers.

An electrode plate of a battery includes a current collector and an active material layer provided on the current collector. In current markets, composite current collectors are used for electrode plates in some batteries. Specifically, such composite current collector includes a middle insulating material layer and conductive material layers provided on two sides of the insulating material layer, and a tab of the battery is disposed at one conductive material layer.

In the process of implementing this application, the applicant of this application has found that due to the insulating material layer disposed between the two conductive material layers, there is no conduction between the two conductive material layers. Therefore, it is difficult for electrons in the conductive material layer on a side facing away from the tab to flow to the tab, resulting in low current flow capacity of the electrode plate.

### SUMMARY

Embodiments of this application are intended to provide a battery and an electronic device, so as to alleviate the situation where there is no conduction between two conductive material layers of an electrode plate.

The embodiments of this application solve the technical problem by using the following technical solution. The solution is specifically as follows.

According to a first aspect, an embodiment of this application provides a battery. The battery includes an electrode plate assembly. The electrode plate assembly includes an electrode plate and a conduction element. The electrode plate includes a current collector. The current collector includes a first conductive material layer, an insulating material layer, and a second conductive material layer stacked together. The current collector is provided with a through opening running through the current collector. The conduction element includes a conductive first conduction part, a conductive second conduction part, and a conductive third conduction part. The first conduction part is disposed on a first side of the current collector and electrically connected to the first conductive material layer. The second conduction part is disposed on a second side of the current collector and electrically connected to the second conductive material layer. The third conduction part is disposed at the through opening and electrically connected to both the first conduction part and the second conduction part. The first side is a side, provided with the first conductive material layer, of the current collector; and the second side is a side, provided with the second conductive material layer, of the current collector.

In the battery provided in this embodiment of this application, the first conductive material layer implements electron conduction with the second conductive material layer through the first conduction part, the third conduction part, and the second conduction part in sequence. To be specific, the battery provided in this embodiment of this application can alleviate the situation where there is no conduction between two conductive material layers in an existing current collector.

In some embodiments, the electrode plate assembly includes a first conductive sheet and a second conductive sheet. The first conductive sheet is disposed on a surface of the first conductive material layer and includes a first connection region and a second connection region connected with each other. In a first set direction, a projection of the first connection region falls on the surface of the first conductive material layer, and a projection of the second connection region falls on the through opening. The first set direction is a direction from the first conductive material layer to the insulating material layer. The second conductive sheet is disposed on a surface of the second conductive material layer and includes a third connection region and a fourth connection region connected with each other. In a direction opposite to the first set direction, a projection of the third connection region falls on the surface of the second conductive material layer, and a projection of the fourth connection region falls on the through opening, where at least one of the second connection region and the fourth connection region at least partially extends into the through opening, and the second connection region is connected to the fourth connection region. The first conduction part includes the first connection region, the second conduction part includes the third connection region, and the third conduction part includes the second connection region and the fourth connection region. In this way, the first conductive material layer implements electron conduction with the second conductive material layer through the first connection region, the second connection region, the fourth connection region, and the third connection region in sequence.

In some embodiments, the electrode plate assembly further includes a tab installed on the current collector, and the tab is electrically connected to the current collector. The provision of the tab allows the electrode plate assembly to be electrically connected to an external electric apparatus when the electrode plate assembly is applied to a battery.

In some embodiments, the tab is welded to the first conductive sheet. In this way, the tab is indirectly electrically connected to the current collector through the first conductive sheet.

In some embodiments, the tab is welded to the first conductive sheet to form a welded region, and at least 70% of a projection of the welded region in a thickness direction of the current collector is located in the through opening. During welding, temperature fluctuates drastically and repeatedly in the welded region. The foregoing arrangement is intended to allow the welded region to be located at the through opening as much as possible, so as to reduce influence of temperature fluctuations in the welded region on the current collector. Since the current collector is vulnerable due to a small thickness, the current collector is prone to a thermal stress under stimulation of drastic and repeated temperature fluctuations, increasing the risk of local damage to the current collector. In addition, the foregoing arrangement causes slight deformation of the tab toward the through opening at a position corresponding to the through opening in some cases. Outward deformation of the tab at the through opening is avoided, which helps to reduce an overall thickness of the electrode plate assembly.

In some embodiments, the tab is fixed to the first conductive sheet and the second conductive sheet through riveting. In this way, the tab is indirectly electrically connected to the current collector through the first conductive sheet.

In some embodiments, the tab includes a base portion, a fixed portion, and an extension portion. The base portion is disposed on a surface of the first conductive sheet, and an end of the base portion extends beyond the current collector. The fixed portion is disposed on a surface of the second conductive sheet. The extension portion penetrates through the first conductive sheet and the second conductive sheet and is connected to both the base portion and the fixed portion. The base portion, the fixed portion, and the extension portion are formed by riveting a same metal sheet. In this way, the tab is indirectly electrically connected to the current collector through the first conductive sheet.

In some embodiments, the battery further includes a rivet, and the rivet penetrates through the tab, the first conductive sheet, and the second conductive sheet in sequence. In this way, the tab is indirectly electrically connected to the current collector through the first conductive sheet.

In some embodiments, the through opening extends on a surface of the current collector to an edge of the current collector. Such arrangement helps the welded region to be located at the through opening as much as possible.

In some embodiments, the current collector is provided with a plurality of through openings. The first conductive sheet covers the through openings, and the second conductive sheet covers the through openings.

In some embodiments, the through opening is rectangular, rhombic, or circular.

In some embodiments, the first conductive sheet and the second conductive sheet are formed by folding a same metal sheet. Certainly, in other embodiments of this application, the first conductive sheet and the second conductive sheet may alternatively be two independent sheet structures. However, compared with such arrangement, an arrangement of forming the first conductive sheet and the second conductive sheet by folding a same metal sheet can ensure that the first conductive sheet and the second conductive sheet are relatively fixed after they are clamped on the current collector, thereby better reducing a potential risk of relative displacement between the first conductive sheet and the second conductive sheet during welding.

In some embodiments, the first conductive sheet includes a first end connected to the second conductive sheet and a second end opposite the first end, where the second end extends beyond the current collector. The second end of the first conductive sheet extends beyond the first current collector to form the tab.

In some embodiments, the battery includes a tab, and the tab includes a base portion, a fixed portion, and an extension portion. The base portion is disposed on the first side of the current collector and electrically connected to the first conductive material layer, and an end of the base portion extends beyond the current collector. The fixed portion is disposed on the second side of the current collector and electrically connected to the second conductive material layer. The extension portion is disposed at the through opening and electrically connected to both the base portion and the fixed portion. The first conduction part includes the base portion, the second conduction part includes the fixed portion, and the third conduction part includes the extension portion. In this way, the first conductive material layer implements electron conduction with the second conductive material layer through the base portion, the extension portion, and the fixed portion in sequence.

In some embodiments, the battery further includes a first conductive sheet, the first conductive sheet is disposed on the surface of the first conductive material layer, and the base portion is disposed on a surface of the first conductive sheet; and/or a second conductive sheet, the second conductive sheet is disposed on the surface of the second conductive material layer, and the fixed portion is disposed on a surface of the second conductive sheet. The arrangement of the second conductive sheet can avoid excessive deformation of the current collector on the second side caused by penetration of a penetrating rivet. In addition, the current collector has small strength due to a small thickness and therefore the arrangement of the second conductive sheet also facilitates clamping of an external clamping structure during riveting; and in this case, the current collector is evenly stressed in a region covered by the second conductive sheet, thereby avoiding a potential risk of damage to the current collector caused by direct contact between the current collector and the clamping structure.

In some embodiments, the battery includes two electrode plate assemblies and a separator, where the separator is disposed between the two electrode plate assemblies. In the two electrode plate assemblies, an electrode plate in one electrode plate assembly constitutes an anode plate of the battery, and an electrode plate in the other electrode plate assembly constitutes a cathode plate of the battery. The separator is disposed between the two electrode plate assemblies to separate them.

According to a second aspect, an embodiment of this application further provides an electronic device, where the electronic device includes any one of the foregoing batteries. With the battery, the electronic device can also alleviate the situation where there is no conduction between two conductive material layers in an existing current collector.

### BRIEF DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.
FIG. 1 is a front view of an electrode plate assembly according to an embodiment of this application;
FIG. 2 is a top view of FIG. 1;
FIG. 3 is a schematic cross-sectional diagram along line A-A in FIG. 1;
FIG. 4 is a front view of an electrode plate in FIG. 1;
FIG. 5 is a schematic diagram of an electrode plate according to another embodiment of this application;
FIG. 6 is a schematic diagram of an electrode plate according to still another embodiment of this application;
FIG. 7 is a schematic diagram of an electrode plate according to yet another embodiment of this application;
FIG. 8 is a schematic diagram of an electrode plate according to still yet another embodiment of this application;
FIG. 9 is a schematic cross-sectional diagram of an electrode plate assembly according to another embodiment of this application;
FIG. 10 is a schematic cross-sectional diagram of an electrode plate assembly according to still another embodiment of this application;
FIG. 11 is a schematic diagram of a battery according to an embodiment of this application; and
FIG. 12 is a schematic diagram of an electronic device according to an embodiment of this application.

In the figures:
1. electrode plate assembly;
100. electrode plate; 110. current collector; 120. active material layer; 111. insulating material layer; 112. first conductive material layer; 113. second conductive material layer; 1101. long side; 1102. short side; 1103. through opening; 1102a. first short side; 1102b. second short side; 11201. first coated region; 11202. first blank region; 11301. second coated region; 11302. second blank region;
200. conduction element; 210. first conduction part; 220. second conduction part; 230. third conduction part; 240. first conductive sheet; 250. second conductive sheet; 241. first connection region; 242. second connection region; 251. third connection region; 252. fourth connection region;
300. tab;
100b. electrode plate; 110b. current collector; 1103b. through opening;
100c. electrode plate; 110c. current collector; 1103c. through opening;
100d. electrode plate; 110d. current collector; 1103d. through opening;
100e. electrode plate; 110e. current collector; 1103e. through opening;
1'. electrode plate assembly; 100'. electrode plate; 110'. current collector; 240'. first conductive sheet; 250'. second conductive sheet; 300'. tab; 310'. base portion; 320'. fixed portion; 330'. extension portion;
1". electrode plate assembly; 100". electrode plate; 110". current collector; 111". insulating material layer; 112". first conductive material layer; 113". second conductive material layer; 240". first conductive sheet; 250". second conductive sheet; 300". tab; 310". base portion; 320". fixed portion; 330". extension portion; 1103". through opening;
2. battery;
3. electronic device;
M. first side; N. second side; X. first direction; Y second direction; Z₁. first set direction; and Z₂. second set direction.

### DESCRIPTION OF EMBODIMENTS

For ease of understanding this application, the following provides a more detailed description of this application with reference to the accompanying drawings and specific embodiments. It should be noted that when an element is referred to as being "fixed to", "fastened to", or "mounted to" another component, it may be directly fixed to the another component, or there may be one or more components therebetween. When an element is "connected to" another element, the element may be directly connected to the another element, or there may be one or more elements therebetween. The terms "vertical", "horizontal", "left", "right", "inside", "outside", and similar expressions used in this specification are merely for illustration only.

Unless otherwise defined, all technical and scientific terms used herein shall have the same meanings as commonly understood by persons skilled in the art to which this application belongs. The terms used in the specification of this application are merely intended to describe specific embodiments but not to limit this application. The term "and/or" used in this specification includes any and all combinations of one or more relevant listed items.

In addition, technical features involved in different embodiments of this application that are described below may be combined as long as they do not conflict with each other.

In this specification, the term "installation" includes fixing or restricting a certain element or apparatus at a specific position or place by welding, screwing, clamping, bonding, and the like. The element or apparatus can remain stationary in the specific position or place or move within a limited range. The element or apparatus can be disassembled or cannot be disassembled after fixed or restricted at the specific position or place. This is not limited in some embodiments of this application.

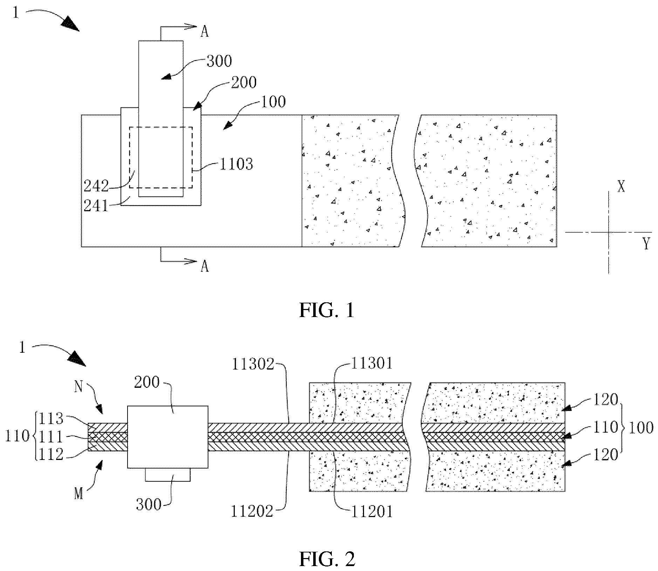

First, this application provides an electrode plate assembly. FIG. 1 to FIG. 3 are respectively a front view, a top view, and a schematic cross-sectional diagram along line A-A of an electrode plate assembly 1 according to an embodiment of this application. The electrode plate assembly 1 includes an electrode plate 100 and a conduction element 200. The electrode plate 100 includes a current collector 110. The current collector 110 includes a first conductive material layer 112, an insulating material layer 111, and a second conductive material layer 113 stacked in sequence, and is also provided with a through opening 1103 running through the current collector. The conduction element 200 includes a first conduction part 210, a second conduction part 220, and a third conduction part 230 which are all conductive. The first conduction part 210 is disposed on a first side M of the current collector 110 and electrically connected to the first conductive material layer 112. The second conduction part 220 is disposed on a second side N of the current collector 110 and electrically connected to the second conductive material layer 113. The third conduction part 230 is disposed at the through opening 1103 and electrically connected to both the first conduction part 210 and the second conduction part 220, thereby implementing electron conduction between the first conductive material layer 112 and the second conductive material layer 113. The first side M is a side, provided with the first conductive material layer 112, of the current collector 110. The second side N is a side, provided with the second conductive material layer 113, of the current collector 110. The first side M and the second side N are respectively two sides in a thickness direction of the current collector 110.

The following describes specific structures of the electrode plate 100 and the conduction element 200 in sequence.

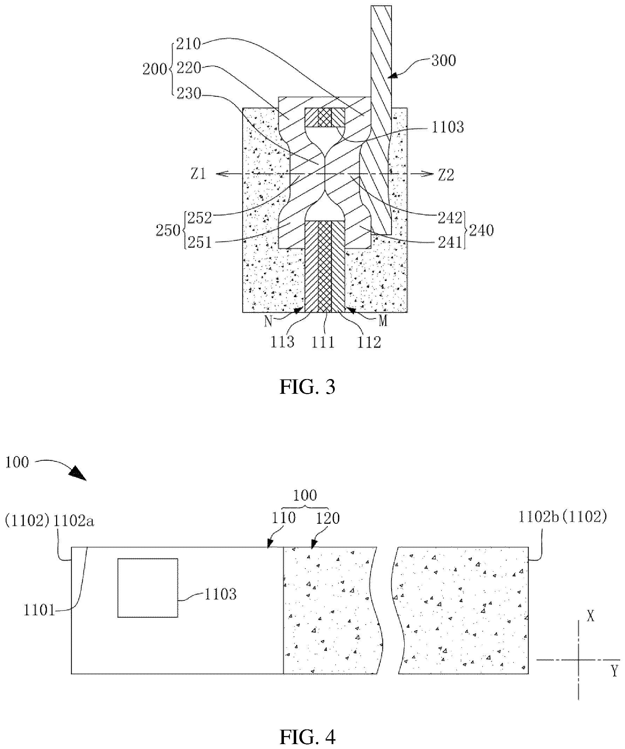

For the electrode plate 100, specifically refer to FIG. 4. FIG. 4 is a front view of the electrode plate 100, and in combination with FIG. 1 to FIG. 3, the electrode plate 100 includes a current collector 110 and an active material layer 120. The current collector 110 is a lathy sheet structure. An outer edge contour thereof includes two long sides 1101 respectively disposed at two ends thereof in a first direction X and two short sides 1102 respectively disposed at the two ends thereof in a second direction Y, where the first direction X intersects with the second direction Y. The long side 1101 is a long side of the current collector 110 in a flattened state. An extension direction of the long side 1101 is an extension direction of the current collector 110. When the current collector 110 is flattened, the long side 1101 extends straightly. When the current collector 110 is wound, the long side 1101 extends curvedly. The short side 1102 is a short side of the current collector 110 in a flattened state. An extension direction of the short side 1102 is a width direction of the current collector 110 in the flattened state. In this embodiment, the long side 1101 is perpendicular to the short side 1102. In other words, the first direction X is perpendicular to the second direction Y. Certainly, in other embodiments, the long side 1101 and the short side 1102 may alternatively arranged with another included angle. It is worth noting that thickness of the current collector 110 is quite small with respect to that of the active material layer 120. The thickness of the current collector 110 is generally less than 200 micrometers (µm). In current markets, the thicknesses of most current collectors are not greater than 100 µm. In FIG. 2 and FIG. 3, to facilitate illustration of a structure of the current collector 110, its dimension in a thickness direction is exaggerated. However, it should be understood that a thickness ratio relation between the current collector 110 and the active material layer 120 shown in the figures does not constitute any limitation on a thickness ratio relation of an actual electrode plate product.

For the current collector 110, still referring to FIG. 2, and in combination with other accompanying drawings, in this embodiment, the current collector 110 is a composite current collector. Specifically, the current collector 110 includes a first conductive material layer 112, an insulating material layer 111, and a second conductive material layer 113 stacked in sequence in the thickness direction of the current collector 110. The insulating material layer 111 is made of an insulating material, is a substrate for arranging the first conductive material layer 112 and the second conductive material layer 113, and also provides physical separation between the first conductive material layer 112 and the second conductive material layer 113. Optionally, the insulating material layer 111 includes a polymer material. Further optionally, the insulating material layer 111 includes at least one of polyethylene, polypropylene, polystyrene, polymethyl methacrylate, polyvinyl chloride, nylon, polycarbonate, polyurethane, polytetrafluoroethylene, polyethylene glycol terephthalate, epoxy resin, phenolic plastic, polyimide, or melamine formaldehyde resin. The first conductive material layer 112 and the second conductive material layer 113 are made of a conductive material and are respectively disposed on both sides of the insulating material layer 111. Specific materials thereof are not limited in this application. For example, in this embodiment, the electrode plate 100 is an anode plate, and the first conductive material layer 112 and/or the second conductive material layer 113 may be made of copper. It can be understood that in other embodiments of this application, the first conductive material layer 112 and/or the second conductive material layer 113 may alternatively be made of another appropriate conductive material such as copper alloy, nickel, or nickel alloy, which is not described in detail herein. In addition, in other embodiments of this application, the electrode plate 100 may alternatively be a cathode plate. In this case, the first conductive material layer 112 and/or the second conductive material layer 113 may be made of an appropriate conductive material such as aluminum or aluminum alloy, which is not described in detail herein. A manner of arranging the first conductive material layer 112 and the second conductive material layer 113 on the insulating material layer 111 may be electroplating, spray-coating, or adhesion. This is not limited in this application.

The current collector 110 is provided with a through opening 1103. The through opening 1103 runs through the current collector 110 along the thickness direction of the current collector 110. The through opening 1103 is used for a part of the conduction element 200 to extend in, and a position relation between the through opening 1103 and the conduction element 200 is described hereinafter in detail.

For the active material layer 120, still referring to FIG. 2, and in combination with other accompanying drawings, the active material layer 120 is provided on a surface of the current collector 110, and is a material layer for intercalating or deintercalating lithium ions. Specifically, a first coated region 11201 and a first blank region 11202 are provided on a surface of the first conductive material layer 112, where the first coated region 11201 is coated with the active material layer 120, and the first blank region 11202 is an exposed region not provided with the active material layer 120. In other words, the surface of the first conductive material layer 112 has the first coated region 11201 provided with the active material layer 120 and the first blank region 11202 not provided with the active material layer 120. Similarly, a surface of the second conductive material layer 113 has a second coated region 11301 provided with the active material layer 120 and a second blank region 11302 not provided with the active material layer 120. The first blank region 11202 and the second blank region 11302 are disposed opposite each other in the thickness direction of the current collector 110.

In this embodiment, the first blank region 11202 and the second blank region 11302 are located on a same end portion of the current collector 110. Specifically, the two short sides 1102 of the current collector 110 are disposed opposite each other in the extension direction of the long sides 1101. The two short sides 1102 are a first short side 1102a and a second short side 1102b, respectively. The first blank region 11202 starts from the first short side 1102a and extends toward the second short side 1102b. The second blank region 11302 starts from the first short side 1102a and extends toward the second short side 1102b. It can be understood that in other embodiments of this application, arrangement positions of the first blank region 11202 and the second blank region 11302 may alternatively be adaptively changed on the basis described above. For example, in some other embodiments of this application, the first blank region 11202 and the second blank region 11302 are both located at a middle position of the current collector 110 in the extension direction along the long sides. Specifically, the first coated region 11201 is provided between the first short side 1102a and the first blank region 11202 and between the second short side 1102b and the first blank region 11202, and the second coated region 11301 is provided between the first short side 1102a and the second blank region 11302 and between the second short side 1102b and the first blank region 11302. The first blank region 11202 and the second blank region 11302 are disposed opposite each other.

For the conduction element 200, specifically referring to FIG. 3, and in combination with other accompanying drawings, the conduction element 200 includes a first conduction part 210 disposed on a first side M of the current collector 110, a second conduction part 220 disposed on a second side N of the current collector 110, and a third conduction part 230 disposed at the through opening 1103. The first conduction part 210, the second conduction part 220, and the third conduction part 230 are all conductive components. The first conduction part 210 is electrically connected to the first conductive material layer 112. The second conduction part 220 is electrically connected to the second conductive material layer 113. The third conduction part 230 is disposed at the through opening 1103 so as to be electrically connected to both the first conduction part 210 and the second conduction part 220, thereby implementing electron conduction between the first conductive material layer 112 and the second conductive material layer 113.

In these embodiments, the conduction element 200 includes a first conductive sheet 240 and a second conductive sheet 250. Specifically, the first conductive sheet 240 and the second conductive sheet 250 are both sheet structures. The first conductive sheet 240 is disposed on the surface of the first conductive material layer 112, while the second conductive sheet 250 is disposed on the surface of the second conductive material layer 113. The first conductive sheet 240 includes a first connection region 241 and a second connection region 242 connected to each other. The first connection region 241 faces the first conductive material layer 112 and is attached to the surface of the first conductive material layer 112, while the second connection region 242 faces the through opening 1103 and at least partially extends into the through opening 1103. A boundary of the first connection region 241 and the second connection region 242 is an edge contour of the through opening 1103 on the surface of the first conductive material layer 112. To be specific, in a first set direction Z₁ shown in the figure, a projection of the first connection region 241 falls on the surface of the first conductive material layer 112, and a projection of the second connection region 242 falls on the through opening 1103. Optionally, the entire first conductive sheet 240 covers the through opening 1103. In this way, the entire second connection region 242 seals an end of the through opening 1103 connected to the first conductive material layer 112 and at least partially extends into the through opening 1103. The entire first connection region 241 is arranged in a ring shape around the second connection region 242 and the through opening 1103.

Similarly, the second conductive sheet 250 includes a third connection region 251 and a fourth connection region 252 connected to each other. The third connection region 251 faces the second conductive material layer 113 and is attached to the surface of the second conductive material layer 113, while the fourth connection region 252 faces the through opening 1103 and the second connection region 242 and at least partially extends into the through opening 1103. A boundary of the third connection region 251 and the fourth connection region 252 is an edge contour of the through opening 1103 on the surface of the second conductive material layer 113. To be specific, in a second set direction Z₂ shown in the figure, a projection of the third connection region 251 falls on the surface of the second conductive material layer 113, and a projection of the fourth connection region 252 falls on the through opening 1103. The fourth connection region 252 is electrically connected to the second connection region 242. In this embodiment, the fourth connection region 252 and the second connection region 242 are fixed through welding. For example, they can be fixed through ultrasonic welding or laser welding. Optionally, the entire second conductive sheet 250 covers the through opening 1103. In this way, the fourth connection region 252 seals an end of the through opening 1103 connected to the second conductive material layer 113 and at least partially extends into the through opening 1103. The entire third connection region 251 is arranged in a ring shape around the fourth connection region 252 and the through opening 1103. The arrangement that the first conductive sheet 240 and the second conductive sheet 250 jointly seal the through opening 1103 helps to avoid a potential risk of a fused material at their joint surface escaping outside the through opening 1103. It is worth noting that "the first set direction" described in the specification of this application is a direction from the first conductive material layer 112 to the insulating material layer 111, "the second set direction" is a direction from the second conductive material layer 113 to the insulating material layer 111, and the first set direction Z₁ is opposite to the second set direction Z₂.

The first conduction part 210 includes the first connection region 241, the second conduction part 220 includes the third connection region 251, and the third conduction part 230 includes the second connection region 242 and the fourth connection region 252 both at least partially extending into the through opening 1103. The first conductive material layer 112 implements electron conduction with the second conductive material layer 113 through the first connection region 241, the second connection region 242, the fourth connection region 252, and the third connection region 251 in sequence. It can be understood that in other embodiments of this application, it is possible that one of the second connection region 242 and the fourth connection region 252 at least partially extends into the through opening 1103, and is fixedly connected to the other one of the two.

In this embodiment, the first conductive sheet 240 and the second conductive sheet 250 are formed by folding a same metal sheet and are respectively clamped on two surfaces of the current collector 110. Certainly, in other embodiments of this application, the first conductive sheet 240 and the second conductive sheet 250 may alternatively be two independent sheet structures. However, compared with such arrangement, an arrangement of forming the first conductive sheet 240 and the second conductive sheet 250 by folding a same metal sheet can ensure that the first conductive sheet 240 and the second conductive sheet 250 are relatively fixed after they are clamped on the current collector 100, thereby better reducing a potential risk of relative displacement between the first conductive sheet 240 and the second conductive sheet 250 during welding.

Further, to allow the electrode plate assembly 1 to be connected to an external electric apparatus after the electrode plate assembly 1 is applied to a battery, the electrode plate assembly 1 further includes a tab 300 installed on the current collector 110 and electrically connected to the current collector 110. Specifically, still referring to FIG. 3, one end of the tab 300 is welded to the first conductive sheet 240, and another end extends beyond an edge of the current collector 110. Preferably, at least 70% of a projection of a welded region formed by welding the tab 300 to the first conductive sheet 240 in the thickness direction of the current collector 110 is located in the through opening 1103, where the "welded region" in the specification of this application means a joint surface formed by the first conductive sheet 240 and the tab 300 during welding. During welding, temperature fluctuates drastically and repeatedly in the welded region. The foregoing arrangement is intended to allow the welded region to be located at the through opening 1103 as much as possible, so as to reduce influence of temperature fluctuations in the welded region on the current collector 110. Since the current collector 110 is vulnerable due to a small thickness, the current collector 110 is prone to a thermal stress under stimulation of drastic and repeated temperature fluctuations, increasing the risk of local damage to the current collector 110. In addition, the foregoing arrangement causes slight deformation of the tab 300 toward the through opening 1103 at a position corresponding to the through opening 1103 in some cases. Outward deformation of the tab 300 at the through opening 1103 is avoided, which helps to reduce an overall thickness of the electrode plate assembly 1. Preferably, the projections of all the welded regions in the thickness direction of the current collector 110 do not fall on the current collector 110 but on the through opening 1103. As for the quantity, the tab 300 may be provided in one as shown in FIG. 1, or provided in plurality. For example, in some embodiments, the electrode plate assembly 1 includes a plurality of tabs 300. Correspondingly, the electrode plate assembly 1 also includes a plurality of conduction elements 200. The conduction elements 200 are spaced apart along the extension direction of the long sides of the current collector 110, and each tab is correspondingly connected to one conduction element 200.

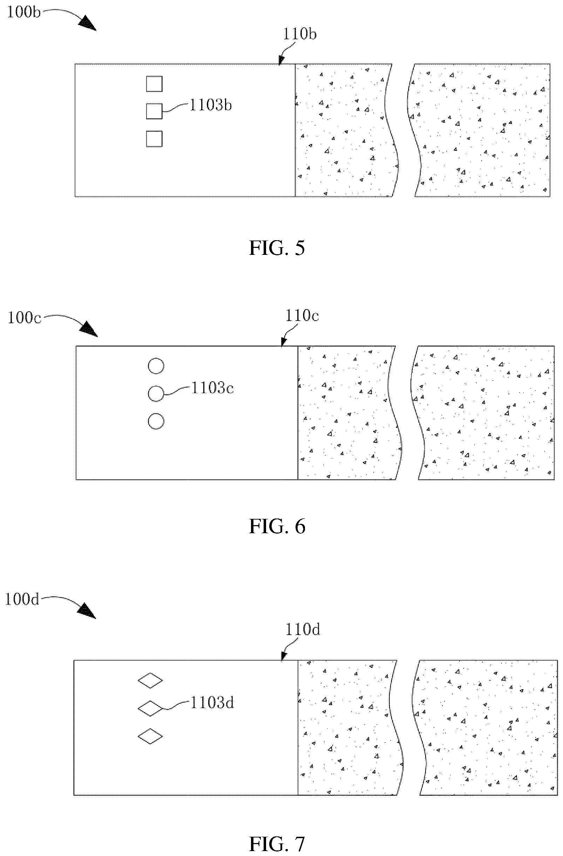

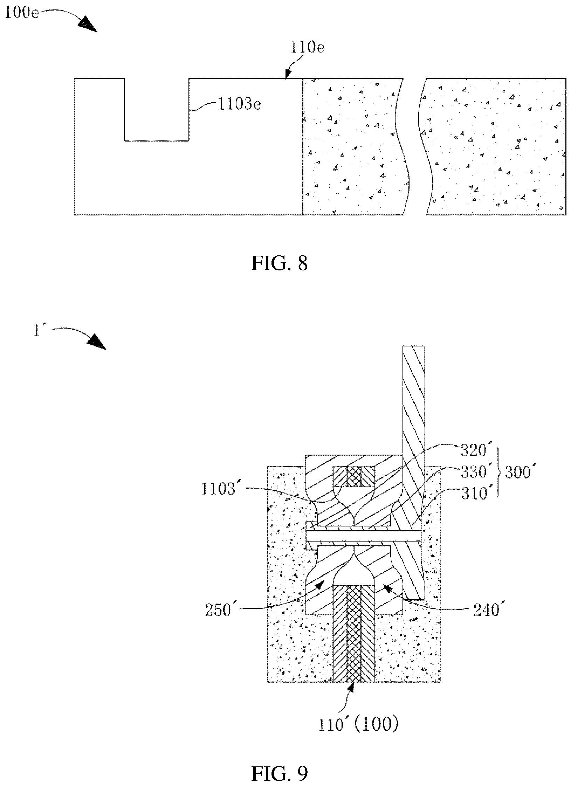

It is worth noting that although the through opening 1103 may be a single square closed structure on the surface of the first conductive material layer 112 in this embodiment, the shape and position of the through opening 1103 are variable. This is not specifically limited in this application as long as the through opening 1103 runs through the current collector 110 along the thickness direction of the current collector 110. For example, FIG. 5 is a schematic diagram of an electrode plate 100b according to another embodiment of this application, and the electrode plate 100b differs from the electrode plate 100 in the foregoing embodiment mainly in that: the current collector 110b is provided with a plurality of through openings 1103b, the through openings 1103b are spaced apart, and the first conductive sheet and the second conductive sheet both cover the through openings 1103b and are both fixed through welding in regions corresponding to the through openings 1103b. For another example, FIG. 6 is a schematic diagram of an electrode plate 100c according to still another embodiment of this application, and the electrode plate 100c differs from the electrode plate 100b in the foregoing embodiment mainly in that: a through opening 1103c provided in a current collector 110c is circular rather than square as in the electrode plate 100b. For still another example, FIG. 7 is a schematic diagram of an electrode plate 100d according to yet another embodiment of this application, and the electrode plate 100d differs from the electrode plate 100b in the foregoing embodiment mainly in that: a through opening 1103d provided in a current collector 110d is prismatic rather than square as in the electrode plate 100b. For yet another example, FIG. 8 is a schematic diagram of an electrode plate 100e according to yet still another embodiment of this application, and the electrode plate 100e differs from the electrode plates in the foregoing embodiments mainly in that: a contour of a through opening 1103e on a surface of a first conductive material layer 112e extends to an edge of a current collector 110e, that is, the contour of the through opening 1103e on the surface of the first conductive material layer 112e is unclosed.

It should be understood that even though the tab 300 in the foregoing embodiment is fixed to the first conductive sheet 240 through welding, this application is not limited thereto, as long as the tab 300 is fixed to the first conductive sheet 240 and connected to the first conductive sheet 240. In other embodiments of this application, the tab 300 may alternatively be fixed to the first conductive sheet 240 and the second conductive sheet 250 through riveting. For example, FIG. 9 is a schematic cross-sectional diagram (FIG. 3 can be referred to for a cross-sectional perspective) of an electrode plate assembly 1' according to another embodiment of this application. In combination with FIG. 3, a tab 300' of the electrode plate assembly 1' is fixed to the first conductive sheet 240 and the second conductive sheet 250 through self-riveting. Specifically, the tab 300' includes a base portion 310', a fixed portion 320', and an extension portion 330'. The entire base portion 310 is a sheet structure, with one end disposed on a surface of the first conductive sheet 240' and another end extending beyond a current collector 110', so as to be electrically connected to the forgoing electric apparatus. The fixed portion 320' is disposed on a surface of the second conductive sheet 250'. The extension portion 330' is located between the base portion 310' and the fixed portion 320', with one end connected to the base portion 310' and another end penetrating through the first conductive sheet 240' and the second conductive sheet 250' through a through opening 1103', so as to be connected to the fixed portion 320'. The base portion 310', the fixed portion 320', and the extension portion 330' are formed by riveting a same metal sheet. The process of forming the tab 300' by riveting the metal sheet is approximately as follows. Firstly, a sheet-like metal sheet is disposed on the surface of the first conductive sheet 240'; subsequently, a penetrating rivet is used to penetrate through the metal sheet, the first conductive sheet 240', and the second conductive sheet 250' in sequence from a surface of the metal sheet facing away from the first conductive sheet 240', such that the metal sheet forms the base portion 310' still located on the surface of the first conductive sheet 240' and a stretch portion extending from the base portion 310' until an end portion is located on a side of the second conductive sheet 250' facing away from the current collector 110', where the stretch portion is formed while the penetrating rivet is penetrating through the metal sheet; and then, a portion of the stretch portion stretching out of the surface of the second conductive sheet 250' is compacted toward the second conductive sheet 250', such that the portion of the stretch portion stretching out of the second conductive sheet 250' is inversely fixed to the surface of the second conductive sheet 250' to form the fixed portion 320', and a portion of the stretch portion extending from the surface of the first conductive sheet 240' to the surface of the second conductive sheet 250' forms the extension portion 330'. For another example, in some other embodiments of this application, the electrode plate assembly further includes a rivet, and the tab 300 is fixed to the first conductive sheet 240 and the second conductive sheet 250 through riveting by using the rivet. Specifically, the rivet penetrates through the tab 300, the first conductive sheet 240, and the second conductive sheet 250 in sequence, with one end leaning against the tab 300 and another end leaning against the second conductive sheet 250, such that the tab 300, the first conductive sheet 240, and the second conductive sheet 250 are fixed.

In addition, even though the tab 300 in these embodiments of this application is indirectly installed on the current collector 110 through the first conductive sheet 240, this application is not limited thereto. For example, in some other embodiments of this application, the tab 300 is directly installed on the surface of the current collector 110, that is, the first blank region 11202 or the second blank region 11302. For another example, in some other embodiments of this application, the electrode plate assembly 1 does not additionally include the tab 300 but form the tab by using the first conductive sheet 240 and/or the second conductive sheet 250. Specifically, the first conductive sheet 240 includes a first end and a second end opposite each other in an extension direction. The first end is connected to the second conductive sheet 250, and the second end extends beyond the first current collector to form the tab.

In conclusion, the electrode plate assembly 1 provided in these embodiments of this application includes the electrode plate 100 and the conduction element 200. The current collector 110 of the electrode plate 100 includes the first conductive material layer 112, the insulating material layer 111, and the second conductive material layer 113 stacked in sequence, and is also provided with the through opening 1103 running through the current collector 110. The first conduction part 210 of the conduction element 200 is disposed on the first side M of the current collector 110 and electrically connected to the first conductive material layer 112. The second conduction part 220 of the conduction element 200 is disposed on the second side N of the current collector 110 and electrically connected to the second conductive material layer 113. The third conduction part 230 of the conduction element 200 is disposed at the through opening 1103 and electrically connected to both the first conduction part 210 and the second conduction part 220.

In current markets, in a battery using a composite current collector, a tab is fixed to the composite current collector through ultrasonic welding, and an insulating material layer in the middle of the composite current collector is partially fused at a corresponding position by a high temperature produced during welding, which implements contact conduction between two conductive material layers. However, this brings high nondeterminacy, because even the insulating material layer is fused, there is still a possibility of no electrical contact between the two conductive material layers. When there is no electrical contact or there is poor contact between the two conductive material layers, it is difficult for electrons in one of the conductive material layers on a side facing away from the tab and the tab to flow to the other one, resulting in low current flow capacity of the electrode plate. In the electrode plate assembly 1 provided in some embodiments of this application, the first conductive material layer 112 implements electron conduction with the second conductive material layer 113 through the first conduction part 210, the third conduction part 230, and the second conduction part 220 in sequence. To be specific, the electrode plate assembly 1 provided in some embodiments of this application can alleviate the situation where there is no conduction between two conductive material layers in an existing current collector.

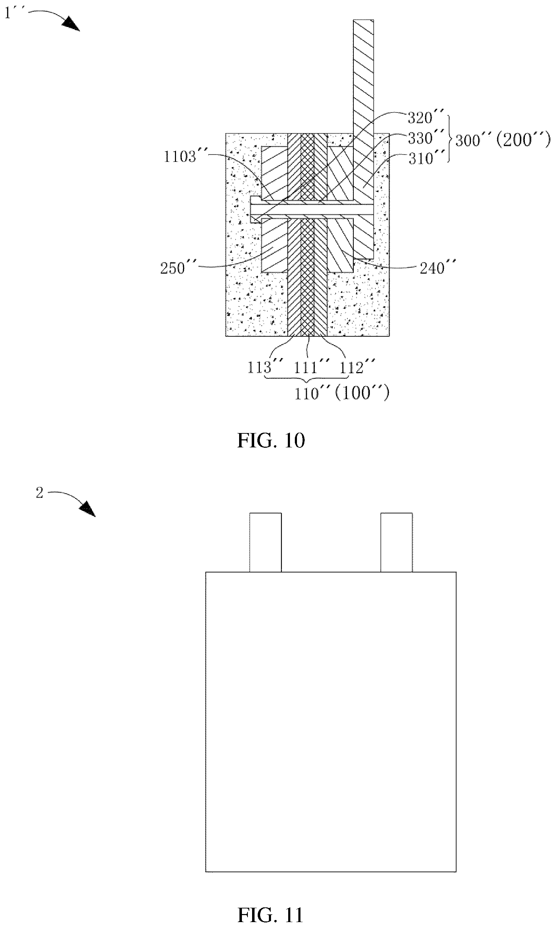

It is worth additionally noting that although the conduction element 200 in the foregoing embodiments includes the first conductive sheet 240 electrically connected to the first conductive material layer 112 and the second conductive sheet 250 electrically connected to the second conductive material layer 113, and they are fixed through welding in the through opening 1103, thereby implementing electron conduction between the first conductive material layer 112 and the second conductive material layer 113. However, this application is not limited thereto, as long as the conduction element 200 includes the first conduction part 210, the second conduction part 220, and the third conduction part 230, where the first conduction part 210 is electrically connected to the first conductive material layer 112, the second conduction part 220 is electrically connected to the second conductive material layer 113, and the third conduction part 230 is electrically connected to both the first conduction part 210 and the second conduction part 220 through the through opening 1103. For example, FIG. 10 a schematic cross-sectional diagram (FIG. 3 can be referred to for a cross-sectional perspective) of an electrode plate assembly 1" according to another embodiment of this application, and the electrode plate assembly 1" also includes an electrode plate 100" and a conduction element 200". The conduction element 200" of the electrode plate assembly 1" includes a tab 300". In other words, the electrode plate assembly 1" in this embodiment implements electron conduction between a first conductive material layer 112" and a second conductive material layer 113" through the tab 300".

Specifically, the tab 300" includes a base portion 310", a fixed portion 320", and an extension portion 330". The entire base portion 310" is a sheet structure disposed on a first side of a current collector 110". One end of the base portion 310" is electrically connected to the first conductive material layer 112, and another end extends beyond the current collector 110", thereby implementing electrical connection to the electric apparatus. The fixed portion 320" is disposed on a second side of the current collector 110" and electrically connected to the second conductive material layer 113". The extension portion 330" is located between the base portion 310" and the fixed portion 320", with one end connected to the base portion 310" and another end penetrating through a first conductive sheet 240" and a second conductive sheet 250" through a through opening 1103", so as to be connected to the fixed portion 320". In this embodiment, a first conduction part of the conduction element 200" includes the base portion 310", a second conduction part of the conduction element 200" includes the fixed portion 320", and a third conduction part of the conduction element 200" includes the extension portion 330".

In this embodiment, the electrode plate assembly 1" also includes the first conductive sheet 240" and the second conductive sheet 250". The first conductive sheet 240" is disposed on a surface of the first conductive material layer 112", and the second conductive sheet 250" is disposed on a surface of the second conductive material layer 113". The base portion 310" is disposed on a surface of the first conductive sheet 240", and the fixed portion 320" is disposed on a surface of the second conductive sheet 250". The base portion 310", the fixed portion 320", and the extension portion 330" are formed by riveting a same metal sheet. The process of forming the tab 300" by riveting the metal sheet is approximately as follows. Firstly, a sheet-like metal sheet is disposed on the surface of the first conductive sheet 240"; subsequently, a penetrating rivet is used to penetrate through the metal sheet, the first conductive sheet 240", and the second conductive sheet 250" in sequence from a surface of the metal sheet facing away from the first conductive sheet 240", such that the metal sheet forms the base portion 310" still located on the surface of the first conductive sheet 240" and a stretch portion extending from the base portion 310" until an end portion is located on a side of the second conductive sheet 250' facing away from the current collector 110", where the stretch portion is formed while the penetrating rivet is penetrating through the metal sheet, and meanwhile the through opening 1103" is formed in the current collector 110"; and then, a portion of the stretch portion stretching out of the surface of the second conductive sheet 250" is compacted toward the second conductive sheet 250", such that the portion of the stretch portion stretching out of the second conductive sheet 250" is inversely fixed to the surface of the second conductive sheet 250" to form the fixed portion 320", and a portion of the stretch portion extending from the surface of the first conductive sheet 240" to the surface of the second conductive sheet 250" forms the extension portion 330". The arrangement of the second conductive sheet 250" can avoid excessive deformation of the current collector 110" on the second side caused by penetration of the penetrating rivet. In addition, the current collector has small strength due to a small thickness and therefore the arrangement of the second conductive sheet 250" also facilitates clamping of an external clamping structure during riveting; and in this case, the current collector is evenly stressed in a region covered by the second conductive sheet 250", thereby avoiding a potential risk of damage to the current collector caused by direct contact between the current collector and the clamping structure. Certainly, in other embodiments of this application, the first conductive sheet 240" can be omitted, and correspondingly, the base portion 310" of the tab 300" is directly disposed on the surface of the first conductive material layer 112"; and/or the second conductive sheet 250" can be omitted, and correspondingly, the fixed portion 320" of the tab 300 is directly disposed on the surface of the second conductive material layer 113".

Based on the same inventive concept, this application further provides a battery; referring to FIG. 11, FIG. 11 is a schematic diagram of the battery 2, and in combination with FIG. 1 to FIG. 10, the battery 2 includes the electrode plate assembly according to any one of the foregoing embodiments. In this embodiment, the battery 2 includes two such electrode plate assemblies and a separator. Specifically, in the two electrode plate assemblies, an electrode plate in one electrode plate assembly constitutes an anode plate of the battery 2, and an electrode plate in the other electrode plate assembly constitutes a cathode plate of the battery 2. The separator is disposed between the two electrode plate assemblies to separate them. It can be understood that even though the battery 2 in this embodiment includes the two electrode plate assemblies, in some other embodiments of this application, the battery 2 may include only one such electrode plate assembly, one conventional electrode plate, and one conventional tab. Specifically, the electrode plate in the electrode plate assembly constitutes the positive electrode plate (or the negative electrode plate) of the battery 2, the tab in the electrode plate assembly constitutes a positive electrode tab (or a negative electrode tab) of the battery 2, the conventional electrode plate constitutes a negative electrode plate (or a positive electrode plate) of the battery 2, and the conventional tab constitutes the negative electrode tab (or the positive electrode tab) of the battery 2.

In some embodiments, to further reduce internal resistance of the electrode plate assembly, the electrode plate assembly includes a plurality of tabs, and the tabs are electrically connected. Specifically, the tabs are spaced apart in an extension direction of long sides of the current collector. The electrode plate assembly is wound along the long sides of the current collector, such that the tabs are located at different layers of this wound structure, and the tabs are aligned and fixedly connected to each other. In this way, portions of the current collector at different layers are electrically connected through the tabs. Such arrangement can reduce the overall internal resistance of the electrode plate assembly to some extent.

With the foregoing electrode plate assembly, the battery 2 can also alleviate the situation where there is no conduction between two conductive material layers in an existing current collector.

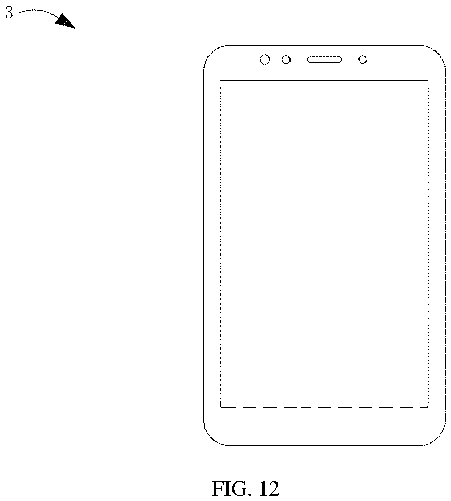

Based on the same inventive concept, another embodiment of this application further provides an electronic device 3. Specifically, referring to FIG. 12, which is a schematic diagram of the electronic device 3, and in combination with FIG. 1 to FIG. 11, the electronic device 3 includes the battery 2 according to any one of the foregoing embodiments. In this embodiment, the electronic device is a mobile phone. It can be understood that in other embodiments of this application, the electronic device may alternatively be any other electronic device such as a tablet, a computer, a drone, a remote controller, or an electric vehicle.

With the foregoing electrode plate assembly, the electronic device 3 can also alleviate the situation where there is no conduction between two conductive material layers in an existing current collector.

In conclusion, it should be noted that the foregoing embodiments are merely intended to describe the technical solutions of this application rather than to limit this application. Under the concept of this application, the foregoing embodiments or the technical features in different embodiments can also be combined, the steps can be implemented in any order, and there are many other changes in different aspects of this application as described above, which, for brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of these embodiments of this application.

## Claims

1. A battery, comprising an electrode plate assembly, wherein the electrode plate assembly comprises an electrode plate and a conduction element; the electrode plate comprises a current collector; the current collector comprises a first conductive material layer, an insulating material layer, and a second conductive material layer stacked together; the current collector is provided with a through opening running through the current collector; and the conduction element comprises:
a conductive first conduction part, disposed on a first side of the current collector and electrically connected to the first conductive material layer;
a conductive second conduction part, disposed on a second side of the current collector and electrically connected to the second conductive material layer; and
a conductive third conduction part, disposed at the through opening and electrically connected to both the first conduction part and the second conduction part; wherein
the first side is a side, provided with the first conductive material layer, of the current collector; and the second side is a side, provided with the second conductive material layer, of the current collector.

2. The battery according to claim 1, wherein the electrode plate assembly comprises:
a first conductive sheet, disposed on a surface of the first conductive material layer and comprising a first connection region and a second connection region connected with each other, wherein in a first set direction, a projection of the first connection region falls on the surface of the first conductive material layer, and a projection of the second connection region falls on the through opening, the first set direction being a direction from the first conductive material layer to the insulating material layer; and
a second conductive sheet, disposed on a surface of the second conductive material layer and comprising a third connection region and a fourth connection region connected with each other, wherein in a direction opposite the first set direction, a projection of the third connection region falls on the surface of the second conductive material layer, and a projection of the fourth connection region falls on the through opening, wherein at least one of the second connection region and the fourth connection region at least partially extends into the through opening, and the second connection region is connected to the fourth connection region; wherein
the first conduction part comprises the first connection region, the second conduction part comprises the third connection region, and the third conduction part comprises the second connection region and the fourth connection region.

3. The battery according to claim 2, wherein the electrode plate assembly further comprises a tab installed on the current collector, and the tab is electrically connected to the current collector.

4. The battery according to claim 3, wherein the tab is welded to the first conductive sheet.

5. The battery according to claim 4, wherein the tab is welded to the first conductive sheet to form a welded region; and
at least 70% of a projection of the welded region in a thickness direction of the current collector is located in the through opening.

6. The battery according to claim 3, wherein the tab is fixed to the first conductive sheet and the second conductive sheet through riveting.

7. The battery according to claim 6, wherein the tab comprises:
a base portion, disposed on a surface of the first conductive sheet, wherein an end of the base portion extends beyond the current collector;
a fixed portion, disposed on a surface of the second conductive sheet; and
an extension portion, penetrating through the first conductive sheet and the second conductive sheet and connected to both the base portion and the fixed portion; wherein
the base portion, the fixed portion, and the extension portion are formed by riveting a same metal sheet.

8. The battery according to claim 6, wherein the battery further comprises a rivet, and the rivet penetrates through the tab, the first conductive sheet, and the second conductive sheet in sequence.

9. The battery according to claim 2, wherein the through opening extends on a surface of the current collector to an edge of the current collector.

10. The battery according to claim 2, wherein the current collector is provided with a plurality of through openings; and
the first conductive sheet covers the through openings, and the second conductive sheet covers the through openings.

11. The battery according to claim 2, wherein the through opening is rectangular, rhombic, or circular.

12. The battery according to any one of claims 2 to 10, wherein the first conductive sheet and the second conductive sheet are formed by folding a same metal sheet.

13. The battery according to claim 2, wherein the first conductive sheet comprises a first end connected to the second conductive sheet and a second end opposite the first end, wherein the second end extends beyond the current collector.

14. The battery according to claim 1, wherein the battery comprises a tab, and the tab comprises:
a base portion, disposed on the first side of the current collector and electrically connected to the first conductive material layer, wherein an end of the base portion extends beyond the current collector;
a fixed portion, disposed on the second side of the current collector and electrically connected to the second conductive material layer; and
an extension portion, disposed at the through opening and connected to both the base portion and the fixed portion; wherein
the first conduction part comprises the base portion, the second conduction part comprises the fixed portion, and the third conduction part comprises the extension portion.

15. The battery according to claim 14, wherein the battery further comprises a first conductive sheet, the first conductive sheet is disposed on a surface of the first conductive material layer, and the base portion is disposed on a surface of the first conductive sheet; and/or
the battery further comprises a second conductive sheet, the second conductive sheet is disposed on a surface of the second conductive material layer, and the fixed portion is disposed on a surface of the second conductive sheet.

16. The battery according to claim 1, wherein the battery comprises two electrode plate assemblies and a separator, wherein the separator is disposed between the two electrode plate assemblies.

17. An electronic device, comprising the battery according to any one of claims 1 to 16.
